# EUROPEAN PATENT APPLICATION

(11) **EP 1 560 153 A2**
(43) Date of publication of application: **03.08.2005**
(21) Application number: 05001739.1
(22) Date of filing: 27.01.2005
(51) Int. Cl.: G06K 15/12, B41J 2/45

(54) **Optical head**

(30) Priority: 29.01.2004 JP 2004022158; 03.08.2004 JP 2004226717
(71) Applicant: SEIKO EPSON CORPORATION, Shinjuku-ku, Tokyo 163-0811 (JP)
(72) Inventor: Kurose, Mitsukazu, Suwa-shi Nagano-ken 392-8502 (JP); Nomura, Yujiro, Suwa-shi Nagano-ken 392-8502 (JP); Tsujino, Kiyoshi, Suwa-shi Nagano-ken 392-8502 (JP); Ikuma, Ken, Suwa-shi Nagano-ken 392-8502 (JP)
(74) Representative: HOFFMANN - EITLE

(57) **Abstract**

An optical head capable of forming images of good quality even when there is a spread in the light emission quantity between the light-emitting elements.

The optical head comprises a plurality of light-emitting element modules each having a plurality of light-emitting elements, a plurality of module light emission quantity control units for controlling the light emission quantity of a plurality of light-emitting elements, and a plurality of module light emission quantity correction units for correcting the light emission quantity of a plurality of light-emitting elements for each light-emitting element module. The module light emission quantity correction units preferably correct the light emission quantity of the light-emitting element so that the light emission quantity of the light-emitting element modules is almost uniform.

## Description

### BACKGROUND

The present invention relates to an optical head for forming latent images on a photosensitive body, for example, in an electrophotographic printer or copier.

In image forming devices such as printers or copiers, an optical head is used to conduct high speed illumination with an exposure light of the prescribed pattern to form an electrostatic latent image on a photosensitive body that was charged in advance.

Japanese Patent Application Laid-open No. 61-182966 disclosed an image forming device in which the increase in printing speed can be realized without increasing the one-cycle exposure time, even when light-emitting elements with a low light emission output are used, by arranging a plurality of light-emitting elements in a row in the sub scanning direction and conducting multiple cycle recording in the same position of the photosensitive body.

This image forming device has recording means for recording m x n image data and implements n-cycle multiple exposure by repeating n times the steps of (A) inputting one row of m image data into the storage means, (B) turning on the recording array head by the image data stored in the storage means and recording an electrostatic latent image on a photosensitive drum, and (C) shifting image data of one row located inside the storage means to the next row.

However, the problem associated with the image forming device disclosed in Japanese Patent Application Laid-open No. 61-182966 was that because there was a spread in the light emission quantity between the light-emitting elements arranged in rows in the main scanning direction and sub scanning direction, images with good quality could not be formed.

It is an object of the present invention to resolve the above-described problems and to provide an optical head for forming latent images with a high speed on a photosensitive body.

### SUMMARY

In order to resolve the above-described problems, the optical head in accordance with the present invention comprises a plurality of light-emitting element modules each having a plurality of light-emitting elements, a plurality of module light emission quantity control units for controlling the light emission quantity of a plurality of light-emitting elements, and a module light emission quantity correction unit for correcting the light emission quantity of a plurality of light-emitting elements for each light-emitting element module. The light-emitting elements are preferably the organic EL elements.

With such a configuration, in the optical head having a plurality of light-emitting element modules provided therein, the light emission quantity of a plurality of light-emitting elements provided in the light-emitting element module is adjusted as a whole for each light-emitting element module. Therefore, with such a configuration, when there is a spread in the light emission quantity between the light-emitting element modules, a uniform light emission quantity of the optical head can be obtained even without a configuration for adjusting the light emission quantity of each individual light-emitting element.

Further, with such a configuration, the light emission quantity of each light-emitting element module can be controlled with a very simple structure even when the spread in the light emission quantity between the light-emitting element modules is large, despite the fact that the spread in the light emission quantity between a plurality of light-emitting elements provided each light-emitting element module, such as organic EL elements, is small.

It is preferred that in the above-described optical head, the module light emission quantity control unit comprise a constant voltage circuit for generating the light emission voltage to be supplied to a plurality of light-emitting elements based on a reference voltage and that the module light emission quantity correction unit correct the light emission quantity by correcting the reference voltage supplied to the corresponding module light emission quantity control unit.

With such a configuration, the voltage activating the light-emitting elements is adjusted, as a whole for a plurality of light-emitting elements, for each light-emitting element module. Therefore, with such a configuration, the light emission quantity between the light-emitting element modules can be adjusted in a simple manner. Therefore, an optical head with a uniform light emission quantity can be provided.

It is preferred that in the above-described optical head, the module light emission quantity correction unit comprise a resistor with a resistance so set as to correct the reference voltage so that the light emission quantity of each light-emitting element is almost uniform for a plurality of light-emitting element modules.

With such a configuration, the light emission quantity of the light-emitting element modules is adjusted by adjusting the resistance of a resistor generating a reference voltage. Therefore, with such a configuration, the light emission quantity among the light-emitting element modules can be adjusted with even simpler configuration.

Further, with such a configuration, a resistor provided with a possibility of trimming can be provided outside each light-emitting element module for each light-emitting element module. Therefore, with such a configuration, the adjustment can be conducted to obtain a uniform light emission quantity among the light-emitting element modules even after a plurality of light-emitting element modules were assembled in an optical head.

Another optical head in accordance with the present invention comprises storage means having an adjustment data register and a plurality of pixel data registers provided correspondingly to a plurality of pixels and employed for receiving he adjustment data for correcting the electric power supplied to the light-emitting element matrix and a plurality of pixel data for exposing each of a plurality of pixels and successively shifting the adjustment data and a plurality of pixel data and storing them in the adjustment data register and a plurality of pixel data registers, an element drive circuit for activating the light-emitting elements corresponding to the pixel data based on the pixel data stored in the pixel data registers and an electric power adjustment circuit for adjusting the electric power supplied to each light-emitting element of the light-emitting element matrix based on the adjustment data, the storage means being a control unit for the optical head for successively activating in a sub scanning direction the light-emitting elements of a light-emitting element matrix in which light-emitting element groups arranged in the sub scanning direction are further arranged in a plurality in the main scanning direction and conducting multiple exposure of a plurality of pixels disposed in the main scanning direction.

With such a configuration, the power adjusting circuit adjusts the light emission quantity of a plurality of light-emitting elements together, based on the adjustment data held in the adjustment data register. Therefore, when the optical head has a plurality of chips, even if a spread in the light emission quantity exists between the chips, this spread can be suppressed.

Furthermore, with such a configuration the light emission quantity is adjusted with the adjustment data. Therefore, the adjustment data stored in the adjustment data register can be appropriately changed and the spread in the light emission quantity can be suppressed even after the chips have been produced or the optical head has been produced and further after the printer has been assembled. Moreover, the adjustment data can be appropriately changed and the light emission quantity can be adjusted to the desired quantity even when the light emission quantity of the optical head varies, for example, changes with time.

The following main factors caused the spread in the light emission quantity of the optical head and/or formed images.
(1) Nonuniformity of the gap between a photosensitive body and a line head occurring when the optical head is mounted on the printer mechanism; (2) nonuniformity of the surface potential caused by the spread between the individual photosensitive bodies; (3) nonuniformity of the surface potential originating due to the relationship between the electrostatic device and photosensitive body; (4) nonuniformity of the gap between the developing roller and photosensitive body; (5) nonuniformity of the surface potential caused by the spread between individual transfer belts; (6) nonuniformity of the gap between the photosensitive body and transfer belt; (7) nonuniformity of the gap between the transfer belt and paper; (8) nonuniformity of the printing toner density caused by a combination of factors associated with the production process. The above-described configuration makes it possible to suppress the spread in light emission quantity and/or formed images caused at least by those factors.

The aforementioned optical head preferably further comprises an analog conversion circuit for converting the adjustment data into analog data, wherein the electric power adjustment circuit adjusts the electric power based on the adjustment data subjected to analog conversion.

With such a configuration, the electric power supplied to each light-emitting element can be easily adjusted.

The aforementioned optical head may further comprise a plurality of shift registers having a plurality of transfer registers provided correspondingly to a plurality of pixels arranged in the main scanning direction and successively shifting the image data received from the corresponding image data registers.

### DESCRIPTION OF DRAWINGS

FIG. 1 is a plan view from the top of the organic EL array exposure head in accordance with the present invention;
FIG. 2 shows one head chip 1 after it has been mounted on the substrate 34; FIG. 2(a) is a plan view thereof; FIG. 2(b) is a cross-sectional view in the long-axis direction thereof;
FIG. 3 is a plan view for explaining the spacing between the head chips 1 in each row when the head chips 1 are arranged in a two-row zigzag manner;
FIG. 4(a) is a plan view illustrating in greater detail the arrangement of light-emitting portions of the organic EL array exposure head; FIG. 4(b) is a plan view for explaining the exposure positions in exposing the photosensitive body surface by using the organic EL array exposure head shown in FIG. 4(a);
FIG. 5 is a reference plan view of the element arrangement in the organic EL array exposure head of the modification example of the configuration shown in FIG. 4(a);
FIG. 6 shows the entire configuration of the exposure head control circuit in the tandem printer;
FIG. 7 illustrates the circuit configuration of the organic EL array exposure head;
FIG. 8 illustrates the circuit configuration of the driver IC used in the organic EL array exposure head;
FIG. 9 illustrates an example of the configuration of the light quantity correction circuit of the organic EL elements 79;
FIG. 10 illustrates an example of the configuration of the light quantity adjustment circuit of the organic EL elements 79;
FIG. 11 illustrates circuit configuration of the organic EL array exposure head drive unit;
FIG. 12 shows a detailed circuit of the organic EL element drive unit;
FIG. 13 shows a circuit configuration of the organic EL array exposure head drive unit of the modification example of the configuration shown in FIG. 11;
FIG. 14 shows a detailed circuit of the organic EL array exposure head drive unit of the modification example shown in FIG. 12;
FIG. 15 shows the timing relating to image data (light emission time data) reception of the driver IC;
FIG. 16 shows the timing for transferring the image data to the shift registers in the main axis direction;
FIG. 17 illustrates the main signals of the portion for controlling the passage of current in the organic EL array and the PWM control timing;
FIG. 18 shows the details of current passage timing relating to the organic EL of a plurality of lines constituting the organic EL array;
FIG. 19 shows another example of the circuit configuration of the driver IC used for the organic EL array exposure head;
FIG. 20 shows another example of the configuration of the light quantity adjustment circuit of the organic EL element 79; and
FIG. 21 is employed to explain in greater detail the correction content of the light quantity spread of organic EL element 79 units in the organic EL array exposure head chip 1 and of the organic EL array exposure head chip 1 unit.

### DETAILED DESCRIPTION

The embodiments of the present invention will be described below with reference to the appended drawings. The structure of the organic EL array exposure head and organic EL array exposure head chip in accordance with the present invention will be initially explained, and then the operation of conducting the exposure time control and multiple exposure control by using the organic EL array exposure head in accordance with the present invention will be explained.

### 1. Entire configuration of organic EL array exposure head

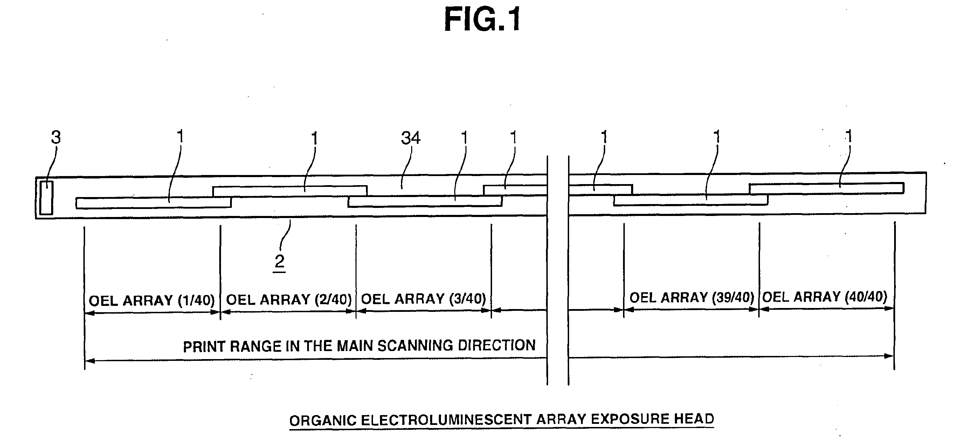

FIG. 1 is a plan view from the top of the organic EL array exposure head in accordance with the present invention. In the figure, the reference numeral 1 stands for a organic EL array exposure head chip (simply referred to hereinbelow as "head chip"), reference numeral 2 stands for an organic EL array exposure head (simply referred to hereinbelow as "exposure head"), reference numeral 3 stands for a connector for receiving data from a printer controller (not shown in the figure), reference numeral 34 stands for a substrate for mounting the connector 3 and head chip 1 and can use, for example, a laminate of glass fabric base material impregnated with an epoxy resin.

The substrate 34 is in the form of a rectangular with the long axis thereof along the main scanning direction. A connector 3 for receiving data from the printer controller is mounted on one end portion of the substrate in the main scanning direction, and a plurality of head chips 1 are mounted in the main scanning direction on the other portion. Further, each head chip 1 is electrically connected to a connector 3 (this connection is not shown in FIG. 1).

Referring to FIG. 1, a plurality of head chips 1 are disposed in a two-row zigzag pattern. Thus, the head chips 1 are disposed in two rows in the sub scanning direction. In the first row, a plurality of head chips 1 are disposed with a spacing somewhat less than the length of the head chip 1 in the main scanning direction. In the second row, a plurality of head chips 1 are disposed with the same spacing as the head chips of the first row in the zones where the head chips 1 of the first row are not located. The aforementioned spacing will be described below in greater detail. Furthermore, the row direction as referred to hereinbelow means a sub scanning direction.

The number of head chips 1 to be mounted on the substrate 34 may be determined based on the number of organic EL light-emitting portions (simply referred to hereinbelow as "light-emitting portions") in the main scanning direction where the head chips 1 are formed and the maximum image formation length in the main scanning direction. For example, if we assume that one head chip 1 forms 192 light-emitting portions in the main scanning direction, then when the image can be formed with a resolution of 600 dpi on a paper sheet of an A4 size, a total of 40 head chips 1 may be disposed in a two-row zigzag pattern on the substrate 34.

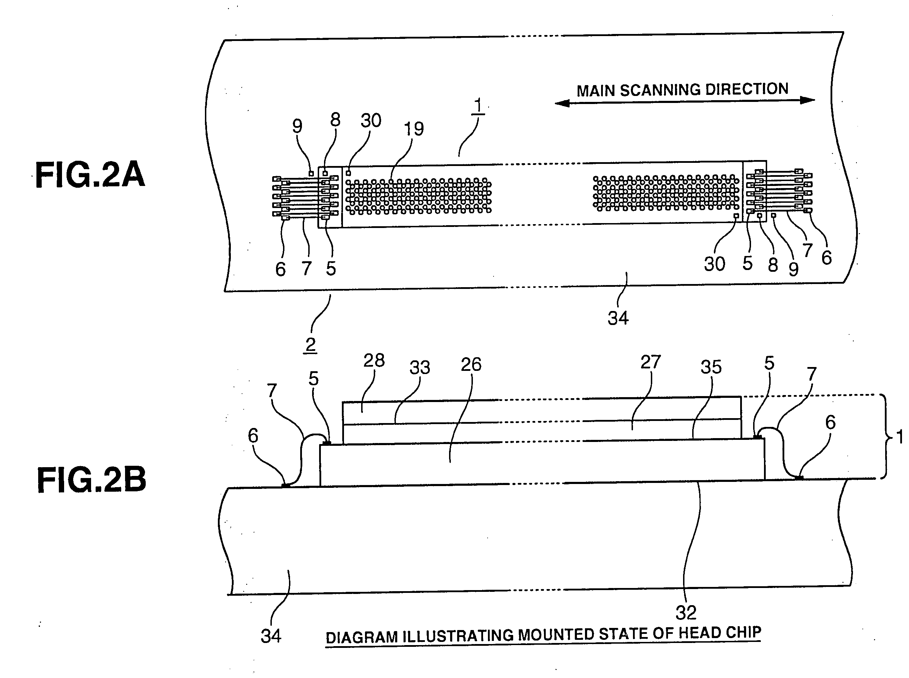

FIG. 2 illustrates one head chip 1 in a state after mounting on the substrate 34. FIG. 2(a) is a plan view thereof. FIG. 2(b) is a cross-sectional view in the longitudinal direction thereof. Referring to FIG. 2, the reference numeral 5 stands for a bonding pad on the side of the head chip 1, 6 - a bonding pad on the side of the substrate 34, 7 - a bonding wire, 8 - a positioning pad on the side of the head chip 1, 9 - a positioning pad on the side of the substrate 34, 19 - a waveguide orifice of a converging lens assembly 28, 26 - a driver IC for controlling the emission of a light-emitting portion formed on an organic EL array assembly (simply referred to hereinbelow as "array assembly") 27, 27 - an array assembly, 28 - a converging lens assembly, 30 - a positioning pad on the side of a converging lens assembly 28, 32 - a dice bond material, 33 - an ultraviolet (UV) curable resin adhesive, 35 - an anisotropically conductive adhesive. Components identical to those shown in FIG. 1 are assigned with identical symbols. In FIGS. 2(a), (b), the specific details relating to the central portion are omitted.

The head chip 1 has a structure in which the driver IC 26 is located in the lowermost portion thereof, array assembly 27 is provided immediately above the driver IC, and the converging lens assembly 28 is provided immediately above the array assembly 27. Such a head chip 1 is fixed with a dice bond material 32 to the substrate 34. Positioning of the head chip 1 and substrate 34 when such a head chip 1 is fixed to the substrate 34 is conducted with the positioning pad 8 on the side of the head chip 1 and the positioning pad 9 on the side of the substrate 34. Thus, as shown in FIG. 2(a), in the position of the substrate 34 where the head chip is to be fixed, the two positioning pads 9 are formed with a spacing almost equal to the length of the driver IC 26 in the main scanning direction, the positioning pad 8 is formed so as to face the positioning pads 9 on the substrate 34, and fixing is conducted so that the positioning pad 8 on the side of the head chip 1 is disposed opposite the positioning pad 9 on the side of the substrate 34.

The head chip 1 has a configuration in which the array assembly 27 is adhesively joined directly above the driver IC 26 with the anisotropically conductive adhesive 35, and the converging lens assembly 28 is adhesively joined directly above the array assembly 27 with the UV-curable resin adhesive 33. As shown in FIG. 2(b), the length in the main scanning direction and width in the sub scanning direction of the array assembly 27 are almost equal to the length in the main scanning direction and width in the sub scanning direction, respectively, of the converging lens assembly 28, and the length of the driver IC 26 in the main scanning direction is larger than the length of the array assembly 27 and converging lens assembly 28 in the main scanning direction. The width of the driver IC 26 in the sub scanning direction is almost equal to the width of the array assembly 27 and converging lens assembly 28 in the sub scanning direction.

The order of adhesive joining of the driver IC 26, array assembly 27, and converging lens assembly 28 will be described below. First, the array assembly 27 is installed and positioned with respect to the driver IC 26, followed by adhesive joining. Then, above the array assembly 27, the converging lens assembly 28 is installed, positioned with respect to the driver IC 26 and adhesively joined.

The prescribed number of wire bonding pads 5 are formed on the portions on both ends of the driver IC 26 that are outside the portions where the array assembly 27 is adhesively joined, and the wire bonding pads 6 are formed, in the number equal to that of the wire bonding pads 5, on the substrate 34. The wire bonding pads 5 of the driver IC 26 are electrically connected with bonding wires to corresponding respective wire bonding pads 6 on the side of the substrate 34.

The wire bonding pads 6 on the side of the substrate 34 are provided to supply various signals from the connector 3 shown in FIG. 1 to the driver IC 26 or to supply a power source voltage and ground potential from a power source circuit (not shown in the figure) to the driver IC 26. The wiring pattern (not shown in the figure) may be formed in advance on the substrate 34 for the purpose of connecting the wire bonding pads 6 to the connector 3 or power source circuit.

Further, referring to FIG. 2, a total of 20 wire bonding pads 5, 6 are provided opposite each other, but the number of wire bonding pads may be appropriately determined based on the number of signals supplied to the driver IC 26.

Further, waveguide orifices 19 are formed in a plurality of rows in the converging lens assembly 28. Thus, the prescribed number of waveguide orifices 19 are formed in the main scanning direction, and a plurality of such rows are formed in the sub scanning direction. Here, the waveguide orifices 19 are formed so as obtain a one-to-one correspondence with the light-emitting portions formed in the array assembly 27. Thus, in the configuration shown in FIG. 2(a), light-emitting portions are formed directly below the waveguide orifices 19.

How many waveguide orifices 19 have to be formed in the main scanning direction, that is, how many light-emitting portions have to be formed in the main scanning direction in the array assembly 27, may be determined by the required resolution. In the present embodiment, as described hereinabove, a total of 192 waveguide orifices and light-emitting portions are formed in the main scanning direction. Of those 192, the waveguide orifices and light-emitting portions with odd numbers are arranged in the first row in the sub scanning direction, and of those 192, the waveguide orifices and light-emitting portions with even numbers are arranged in the second row in the sub scanning direction. Hereinbelow, similarly, 192 x 4 waveguide orifices and light-emitting portions are formed in one head chip 1 in a zigzag manner in a total of 8 rows. How many rows of the waveguide orifices and light-emitting portions have to be arranged in the sub scanning direction, may be determined based on the emitted light quantity of the light-emitting portion. They may be also disposed in a regular lattice form, rather than in a zigzag manner.

Further, as shown in FIG. 2(a), when the light-emitting portions and waveguide orifices 19 are formed in a zigzag manner, the exposure of one line of the image which is to be formed can be also conducted by the rows of waveguide orifices 19 of one row, depending on the required resolution. However, from the standpoint of resolution, it is desired that the exposure of one line of the image be conducted with light-emitting portions and waveguide orifices 19 arranged in a two-row zigzag fashion, so as to conduct the exposure of one line of the image by the light-emitting portions and waveguide orifices 19 of the first row and second row and to conduct the exposure of the adjacent lines by the light-emitting portions and waveguide orifices 19 of the third row and fourth row. In the case shown in FIG. 2(a), the exposure of 8 lines of the image can be conducted by the former method, and the exposure of 4 lines of the image can be conducted by the latter method.

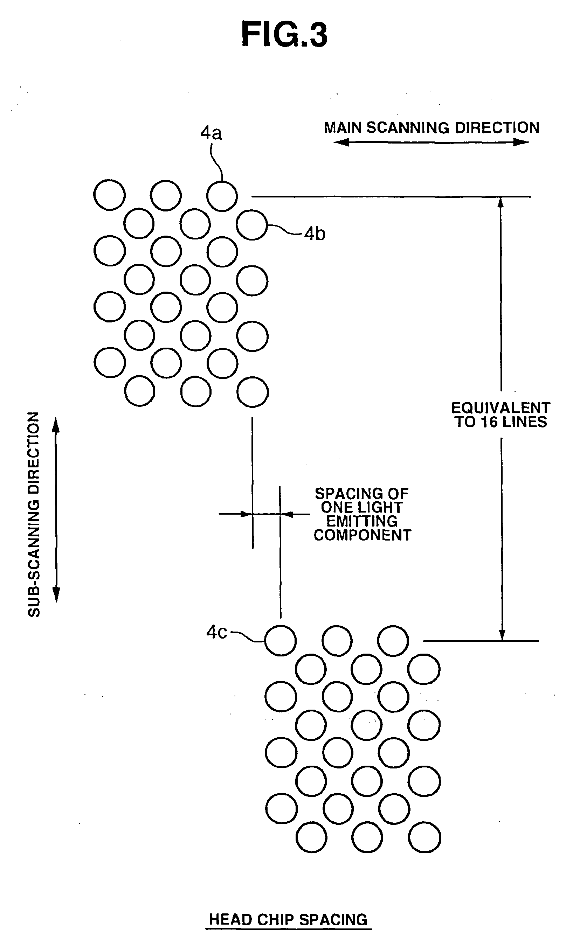

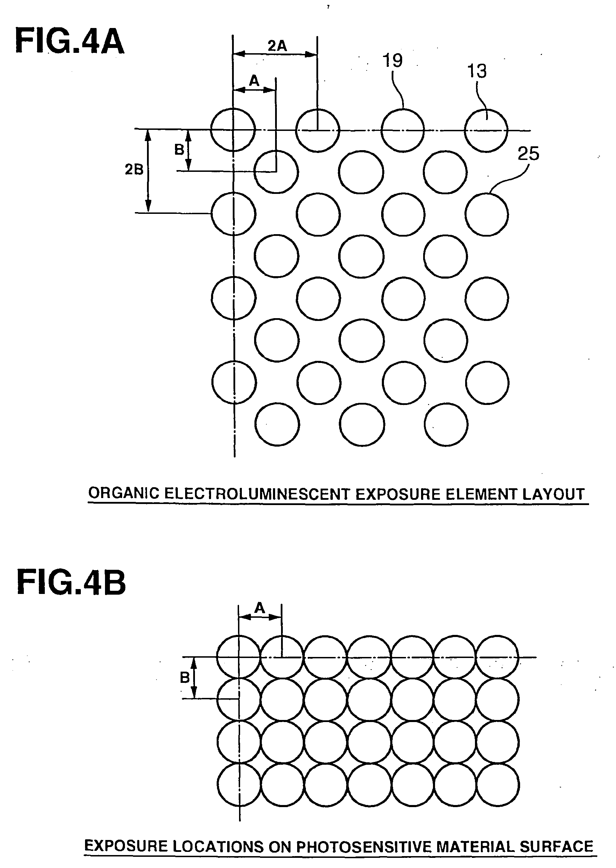

The spacing between the head chips 1 in each row in the case where the head chips are disposed in a two-row zigzag fashion, as shown in FIG. 1, will be explained below with reference to FIG. 3. In FIG. 3, the reference symbol 4a stands for light-emitting portions of the first row of one head chip 1 of the first row shown in FIG. 1, and 4b stands for light-emitting portions at the rightmost end of the head chip 1. If we assume that it indicates light-emitting portions of the first row of the head chips 1 of the second row disposed in a zigzag manner with the aforementioned head chips 1, then the light-emitting portions 4b and light-emitting portions 4c will be disposed with a certain spacing equal to the spacing between the light-emitting portions in each row in the main scanning direction. As a result of such an arrangement, the spacing of pixels in the main scanning direction is constant even in zones where the head chips 1 are disposed in a zigzag fashion.

Further, as shown in FIG. 3, the light-emitting portions 4a and light-emitting portions 4c are disposed with a 16-row spacing of light-emitting portion rows in the sub scanning direction. This 16-row displacement can be resolved, for example, by conducting a successive output processing of image data in an appropriate process in which printing image data are generated by a printer controller and outputted to the aforementioned exposure head 2.

The head chips 1 are fixed to the substrate 34 in a two-row zigzag fashion so as to assume the above-described configuration.

The entire structure of the exposure head 2 is explained hereinabove. Each part thereof will be explained below. First, as mentioned hereinabove, the substrate 34 can be formed from an electrically insulating material, for example, a laminate in which a glass fabric based material is impregnated with epoxy resin. The positioning pads 9 for conducting positioning when the head chips 1 are fixed and wire bonding pads 6 are formed in the prescribed locations on the substrate and a connector 3 is provided in the end portion thereof.

FIG. 4(a) relates to the arrangement of organic EL elements in the converging lens array assembly 4 and is a plan view showing an enlarged part of the structure shown in FIG. 2. The reference numeral 19 stands for a waveguide orifice, and the reference numeral 13 stands for a converging lens. The light-emitting portion of the organic EL is located directly below the converging lens.

If we consider the resolution in the main axis direction of the organic EL print head as 600 dpi, the pitch A of the light-emitting portion will be 1/600 (inch), and the pitch of the light-emitting portions on the line in the same direction as the main axis direction will be 2A and 1/300 (inch). Further, when the light emission shift speed of the light-emitting portion in the secondary axis direction matches the paper feed speed, the pitch B of light-emitting portions becomes B = A. In such a configuration, of the organic EL array, a plurality of rows are disposed in a zigzag fashion in the secondary axis direction.

FIG. 4(b) is a plan view illustrating the results obtained in illuminating a photosensitive body with the organic EL print head with the configuration shown in FIG. 4(a). The state is shown in which exposure was conducted with a 600 dpi pitch (A = B) in the main axis and secondary axis direction.

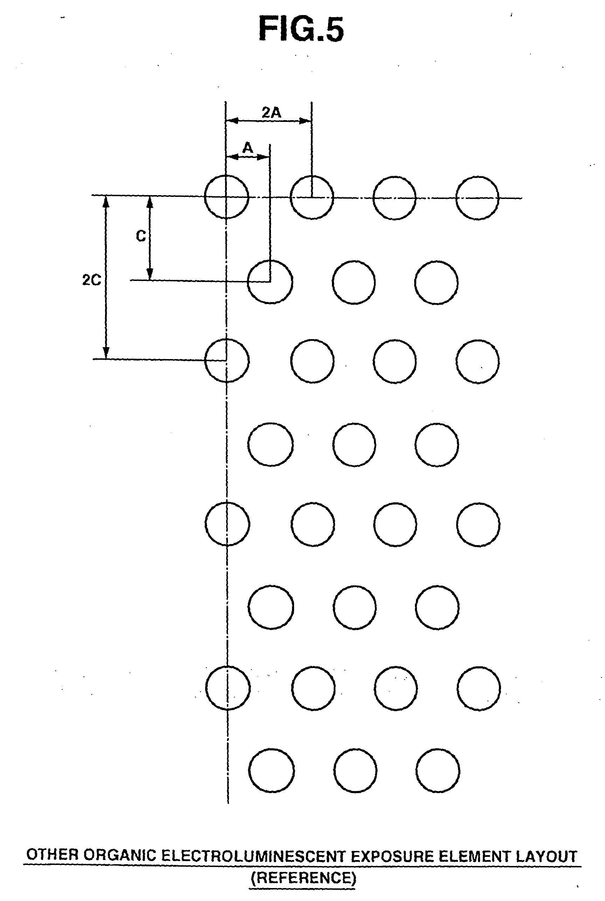

FIG. 5 is a plan view illustrating the configuration of organic EL elements in the modification example of the configuration shown in FIG. 4(a). In this example, 600 dpi is obtained for both the main axis direction and the secondary axis direction as a printing result, but the pitches in the main axis direction and secondary axis direction are different (A ≠ C). In other words, this example shows the arrangement of organic EL elements in the case where the paper feed speed is higher than the light emission shift speed of the light-emitting portions in the secondary axis direction, but in the exposure results obtained when the photosensitive body was illuminated, similarly to FIG. 4(b), the mutual arrangement of light-emitting portions of the organic EL print head is shown with respect to the case where the exposure was conducted with a 600 dpi pitch (A = B) in both the main axis direction and the secondary axis direction.

### 2. Exposure Control Circuit

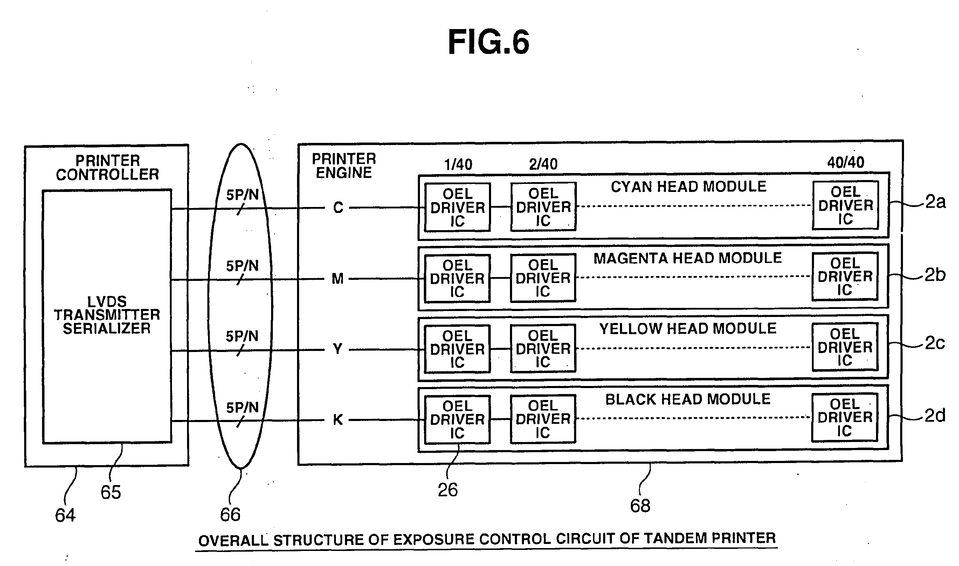

FIG. 6 shows a configuration example of the exposure control circuit of the tandem-type printer, mainly the path of image data inside the tandem printer. Functions of various units will be explained below, while following the flow of image data in the figure.

First, the image data of respective CMYK that were image processed with the printer controller 64 are parallel-to-serial converted in an image data transmission unit 65 and sent to the organic EL print head 32 of respective CMYK located in the head control unit 68 on the printer engine side as a LVDS SERDES signal 66 of respective CMYK. In the exposure head 2, the prescribed number of drivers IC 26 are connected in a digital chain manner, the image data for one line in the main scanning direction are divided and received by the driver IC, subjected to serial-to-parallel, conversion, and successively stored in the shift registers located inside the driver IC. Then, the organic EL elements are ON/OFF controlled according to the gradation value of the image data synchronously with the printing operation of the printer mechanism.

The reference symbol 2a stands for a print head for cyan (C). Similarly, the reference symbol 2b stands for a print head for magenta (M), 2c stands for a print head for yellow (Y), and 2d stands for print head for black (K).

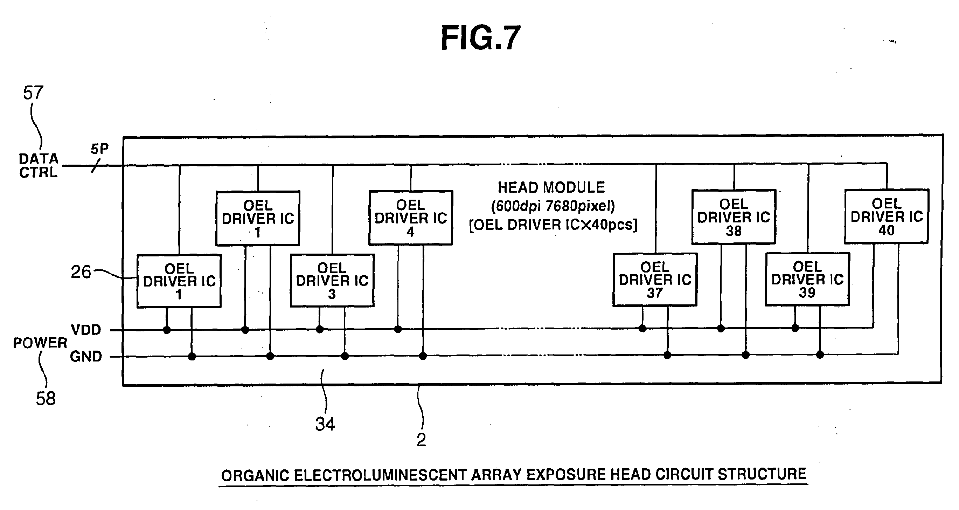

FIG. 7 shows a control circuit configuration of the organic EL array exposure head 2. In the organic EL array exposure head 2, as shown in FIG. 7, the prescribed number of drivers IC 26 are mounted on the substrate in the main scanning direction, each driver IC 26 having a configuration controlling/driving a certain one block of pixels in the main scanning direction and sub scanning direction.

The line 57 for data control links the prescribed number of drivers IC 26 to the same signal line in the main scanning direction and is the signal line for sending the printing data for each one line that has been sent from the printer controller to the allocated driver IC.

The power source line 58 is a power supply line for supplying electric power to the drivers IC 26 arranged in the prescribed number in the main scanning direction.

All the data control line 57 and power source line 58 are connected in parallel to the driver IC, as shown in FIG. 7.

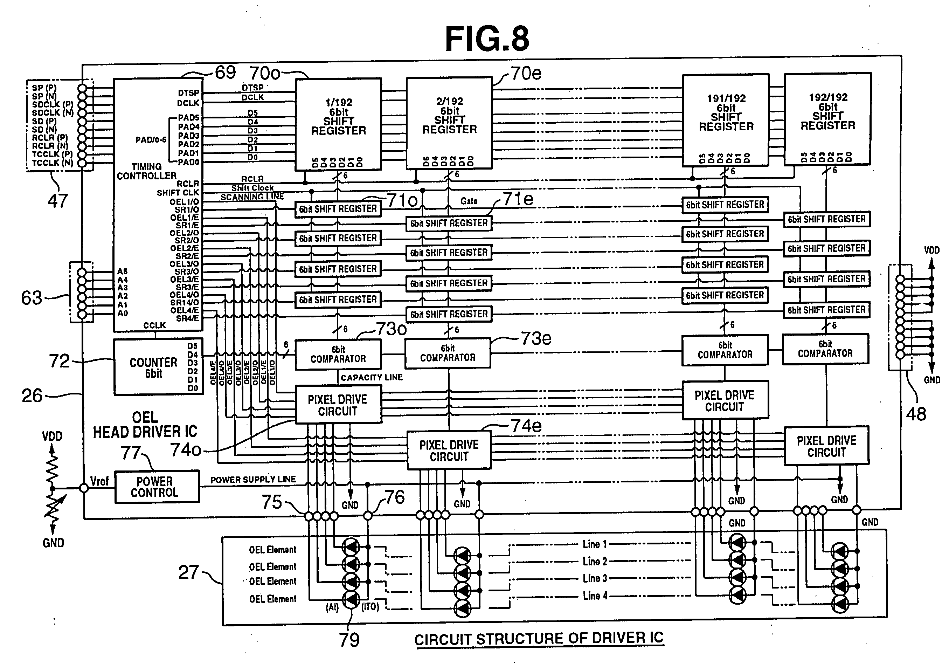

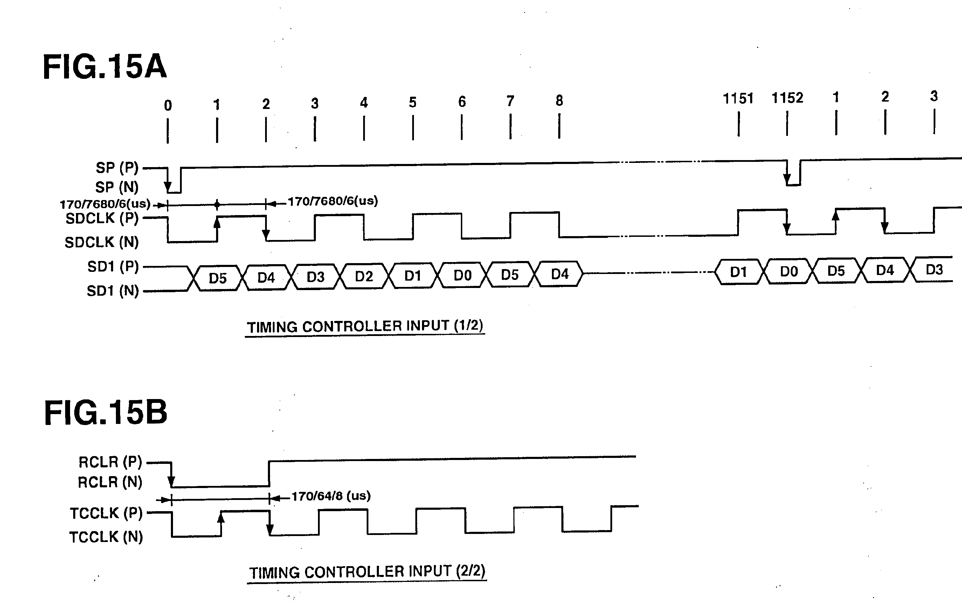

FIG. 8 is an example of circuit configuration of the organic EL array driver IC (driver IC 26). The prescribed number of driver IC covering the printing width in the main scanning direction are mounted on the exposure head 1. In the configuration shown in the figure, a total of 192 organic EL elements are controlled by one driver IC and the number of driver IC is 40, but this number can be varied. The reference numeral 27 stands for an organic EL array which is shown to facilitate the understanding of the configuration of the organic EL array handled by the driver IC. This figure shows a circuit configuration of the driver IC controlling four organic EL elements arranged in the sub scanning direction, but this number is not limiting and any number can be employed. Configuration and functions of each unit will be described below following the flow of signals. The operation timing will be explained with reference to FIG. 15 to FIG. 18.

The reference numeral 47 stands for a data input line. As shown in FIG. 6, connection to the image data transmission unit 65 on the side of the printer controller is made with five differential signal wiring lines 66. Further, inside the driver IC, the connection is made to the organic EL array exposure head chip 1.

The reference numeral 48 stands for a power line pad. Of a plurality of terminals, half are VDD and half are GND.

The address setting pad 63 is for setting the address of each driver IC. In the configuration shown in FIG. 6 and FIG. 7, a total of 40 driver IC are carried. Therefore, 40 combinations are produced. The combinations can be determined by setting the address setting pad 63 digitally to 1 or 0 on the wiring substrate. A timing controller counts the number of SP (P/N) pulse signals of the control line, compares them with the address that has been set, and takes in data when they match.

The reference numeral 69 stands for a timing controller. The light emission time data (gradation data) inputted from the data input line 47 are converted from serial data into 6-bit parallel data with a deserializer (not shown in the figure) located in the input unit of the timing controller and sent successively, with clock synchronization, to shift registers 70(o. e) located at the extension of the 192 register in the rightward direction, as shown in FIG. 8. Those shift registers 70(o, e) correspond to the storage means in accordance with the present invention. In the 192 registers of the shift registers 70(o, e) in the present example, the light emission time data with 6 bits per 1 pixel are stored for 192 pixels (for 1 line in the main scanning direction) per one pixel.

A total of 192 shift registers 71(o, e) are provided correspondingly to 192 registers of the shift registers 70(o, e) which are the storage means. Each shift register 71(o, e) has four registers corresponding to the organic EL array 8 linked in the sub scanning direction.

The respective 6-bit light emission time data are outputted from the 192 registers of the shift registers 70(o, e) to the shift registers 71 (o, e), respectively. Further, the timing controller 69 provides the SHIFT CLK signals and SRn(o, e) signals for controlling the shift timing of the shift registers 71(o, e) and OELn(o, e) signals for controlling the timing of the organic EL element drive circuits 74(o, e), and also provides clock CCLK signals for count controlling the light emission time to the counter 72.

The shift register 71 successively shifts the light emission time data sent from the shift register 70. Further, the light emission time data stored in the selected register are outputted to the comparators 73(o, e) by the SRn(o, e) signals from the timing controller 69.

The counter 72 is the counter for controlling the light emission time, and the bit count of the counter (here, 6 bits) is equal to the bit length of the light emission time data inputted into the shift register 71. Further, the input frequency of the counter is an inverse value (frequency) obtained by recalculating the pixel time in the sub scanning direction as a time and dividing the period thereof by the count. Here, the counter 72 outputs 6-bit count values to comparators 73(o, e).

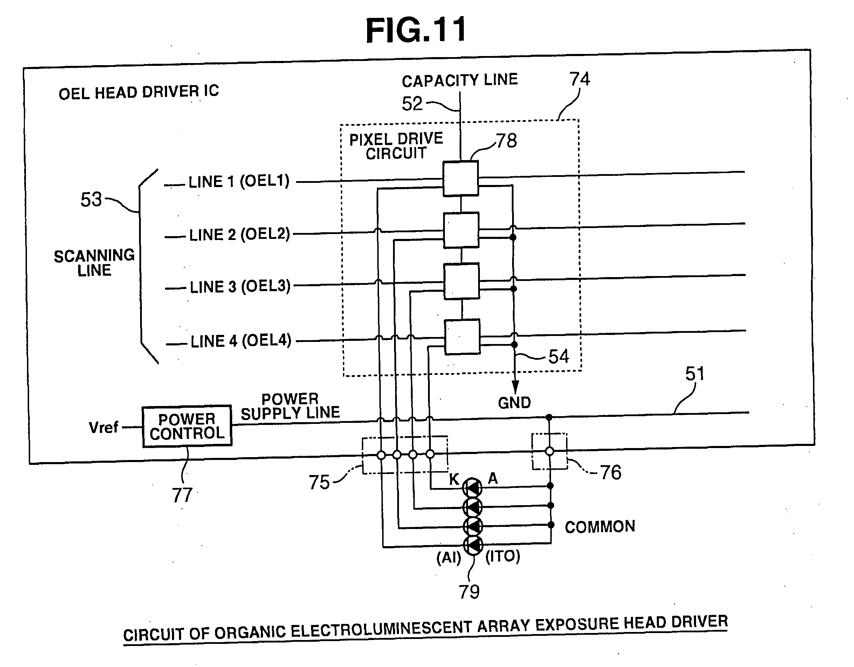

In the comparators 73(o, e), the 6-bit light emission time data sent from the shift registers 71(o, e) synchronously with the timing input signals SRn(o, e) inputted into the shift registers 71(o, e) are compared with the 6-bit count value from the counter 72. When the comparison shows that the count value is less than the light emission time data, an ON signal is outputted to the capacitance line 52. When the count value increases and becomes equal to the light emission time data or larger than the light emission time data, then an OFF signal is outputted into the capacitance line 52. The capacitance line 52 is linked to the organic EL element drive circuits 74(o, e). Therefore, within a period designated by the light emission time data, an ON signal is outputted to the organic EL element drive circuits 74(o, e), and if the light emission time elapses, an OFF signal is outputted. Because the light emission time data has a 6-bit length, as mentioned hereinabove, a total of 2⁶ = 64 gradations are represented according to the length of the light emission interval with respect to each pixel. Further, the timing input signal SRn(o, e) from the timing controller 69 to the shift register 71(o, e) is used at time intervals obtained by dividing the clock period of the counter 72 by the line number in the main scanning direction. The organic EL element drive circuits 74(o, e) active-matrix drive the organic EL element 79 selected by the organic EL element anode connection terminal 75 and organic EL element cathode connection terminal 76 based on the output signals (capacitance line) from the comparators 73(o, e) and timing signals OEL1/O to 4/E (scanning line) from the timing controller 69. This circuit will be explained in detail with reference to FIG. 11.

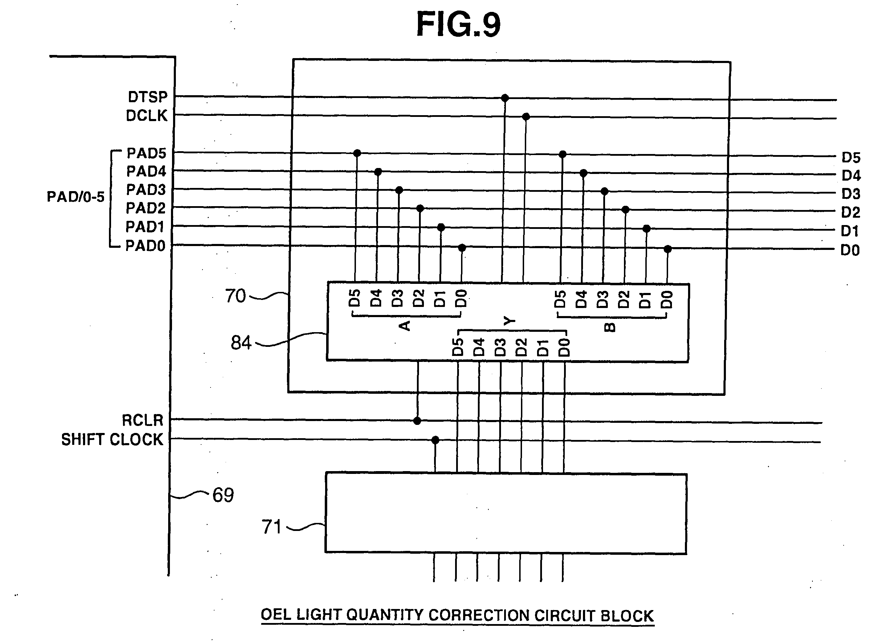

FIG. 9 shows an example of the configuration of a light quantity correction circuit of the organic EL elements 79. An addition circuit 84 comprising inputs A and B and an output Y is provided in the shift register 70. In the addition circuit 84, correction data for correcting the light emission quantity of the organic EL elements 79 is inputted into the input A, and the light emission data indicating the light emission quantity of the organic EL elements 79 is inputted into the input B.

The 6-bit data outputted from the timing controller 69 are composed of 5-bit data indicating the light emission data or correction data and 1-bit data indicting the selection data. In the inputs A and B, 5-bit data are supplied to the terminals D0 to D4, and the selection data is supplied to the terminal D5.

In the present example, when the selection data is "0", the input A is enabled, and when the selection data is "1", the input B is enabled. Therefore, when the selection data is "0", the addition circuit 84 receives the 5-bit data outputted from the timing controller 69 in the input A as the correction data. Further, the addition circuit 84 latches the received correction data. Furthermore, when the selection data is "1", the addition circuit 84 receives the aforementioned 5-bit data in the input B as the light emission data. Then, the addition circuit 84 adds the correction data to the light emission data, converts the addition results into 6-bit data and supplies the conversion results from the output Y to the shift register 71. As a result, the light quantity correction circuit corrects the light quantity of the organic EL elements 79 in the main scanning direction.

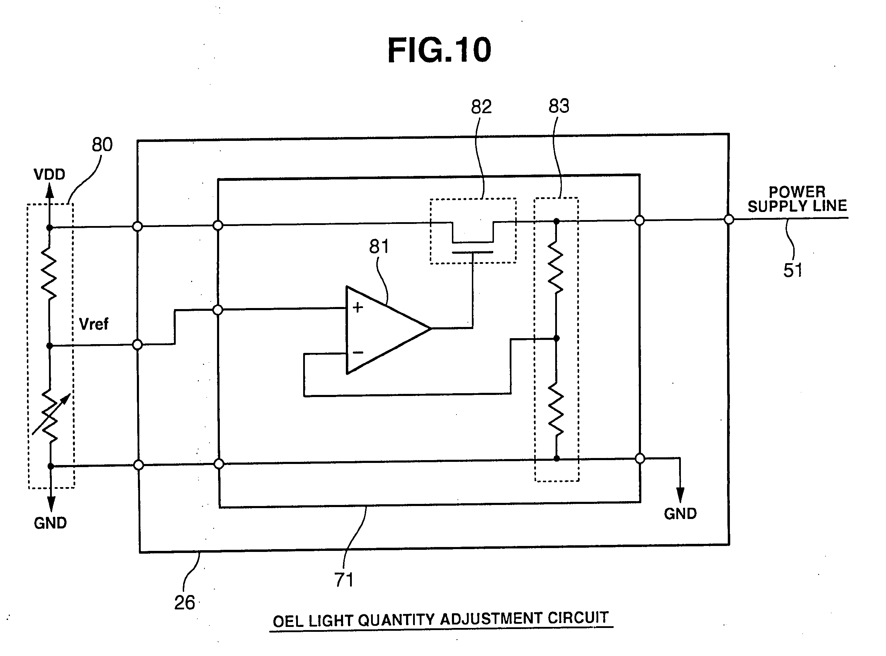

FIG. 10 shows an example of the configuration of the light quantity adjustment circuit of the organic EL elements 79. The light quantity adjustment circuit comprises a power adjustment circuit 77 which is an example of a light quantity control unit and a reference voltage circuit 80 which is an example of a module light emission quantity correction unit. The light emission quantity of the organic EL elements 79 is adjusted for each driver IC 26 which is an example of a light emission element module. More specifically, the power adjustment circuit 77 has a function of adjusting the power supplied to the organic EL elements drive circuit group 74(o, e) via the power supply line.

The reference voltage circuit 80 has a plurality of resistors connected in series between the VDD and GND, and the voltage of contacts of a plurality of resistors is supplied as a reference voltage Vref to a power adjustment circuit 77. The resistance of at least one of a plurality of resistors can be trimmed. The resistors are provided, for example, by printing on the substrate 34 (see FIG. 7), and the resistance thereof is adjusted by laser trimming. This trimming may be conducted after the organic EL array exposure head 2 has been assembled.

The voltage supplied to the power supply line 51 and supplied to the organic EL elements 79 is adjusted by adjusting the resistance of the resistors provided in the reference voltage circuit 80. Thus, the light emission quantity of the organic EL elements 79 is adjusted. Thus, the light quantity adjustment circuit adjusts the light emission quantity for each driver IC 26.

The resistance of the resistors provided in the reference voltage circuit 80 is preferably adjusted so that the light emission quantity of the organic EL elements 79 becomes almost uniform among a plurality of driver IC 26 constituting the organic EL array exposure head 2. For example, the light emission quantity is measured in organic EL elements 79 in a plurality of drivers IC 26, and the resistance of the resistors in the driver IC 26 is adjusted based on the light emission quantity.

The power adjustment circuit 77 has an error amplification circuit 81, a control circuit 82, and a voltage division circuit 83. The voltage division circuit 83 has a plurality of resistors connected in series between the VDD and GND. Furthermore, the voltage division circuit 83 supplies the voltage of contacts of the aforementioned plurality of resistors, that is, the voltage obtained by dividing the VDD, to the error amplification circuit 81. The error amplification circuit 81 compares the voltage divided by the voltage division circuit 83 and a reference voltage Vref and supplies the prescribed voltage based on the comparison results to the control circuit 82.

The control circuit 82 is a MOS transistor in which the VDD is supplied to a source or a drain, and the other of the two is connected to one terminal of the voltage division circuit 83 and the power supply line 51. Further, the prescribed voltage is supplied from the error amplification circuit 81 to the gate of the MOS transistor. Thus, the control circuit 82 controls the power supplied to the power supply line 51, based on the comparison results of the error amplification circuit 81.

FIG. 11 shows a circuit of the organic EL array exposure head drive unit. In this circuit, four organic EL element drive circuits 78 are connected correspondingly to four rows of organic EL elements 79, thereby constituting organic EL element drive circuit group 74(o, e). The organic EL element drive circuit group 74(o, e) is divided into odd lines and even lines inside the driver IC1, as shown in FIG. 8.

The input of the organic EL elements drive circuit group 74(o, e) is the capacitance line 52, scanning line 53, and power supply line 51. The capacitance line 52 is equivalent to the second signal line in accordance with the present invention. As shown in FIG. 8, it is connected to the output of the comparators 73(o, e), serves as a common signal line for four organic EL elements drive circuits 78 and controls the ON/OFF of the organic EL elements 79. The scanning line 53 is equivalent to the first scanning line in accordance with the present invention, and the organic EL elements drive circuits 78 of each line are selectively driven by the timing signals OEL1/O to 4/E which are the scanning line outputs of the timing controller 69. The power supply line 51 is connected to the output of the power adjustment circuit 77 and is a driver power supply line of the organic EL elements 79.

On the other hand, the output of the organic EL element drive circuit group 74(o, e) drives four organic EL elements 79. The cathode connection terminals 75 are connected to the cathodes of organic EL elements 69, and the anode connection terminals 76 are connected to anodes of the organic EL elements 79 and connected to the common side (power supply line).

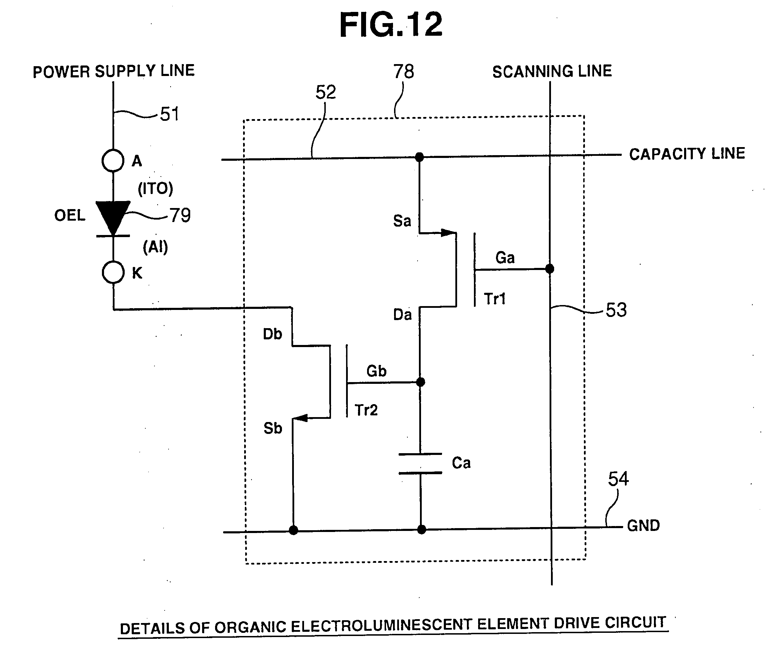

FIG. 12 is a circuit diagram illustrating a light-emitting portion and an individual organic EL element drive circuit 78 for active-matrix driving the light emission portion. In FIG. 12, an organic EL (OEL) element 79 is used as the light-emitting portion, K stands for a cathode terminal thereof, and A stands for an anode terminal thereof. The anode terminal A is connected to the power supply line 51. The reference numeral 53 stands for a scanning line, which is connected to a gate Ga of a switching transistor (Tr1). Further, the reference numeral 52 stands for a capacitance line which is connected to a source Sa of the switching transistor Tr1 The reference numeral 51 stands for a power supply line, and Ca stands for a storage capacitor.

A source Sb of a driving transistor (Tr2) of the organic EL is connected to a GND 54, and a drain Db is connected to the cathode terminal K of the organic EL. Furthermore, a gate Gb of the driving transistor Tr2 is connected to the drain Da of the switching transistor Tr1.

The operation of the circuit shown in FIG. 12 will be described below. If the timing signals OEL1/O to 4/E from the timing controller 69 pass through the scanning line 53 in a state in which an ON signal that was outputted from the comparators 73(o, e ) to the capacitance line 52 has been applied to the source of the switching transistor Tr1, then the switching transistor Tr1 is switched ON. Therefore, the gate voltage of the driving transistor Tr2 increases and the state between the drain Db and source Sb becomes conductive. As a result, the organic EL element is activated and the prescribed quantity of light is emitted. Furthermore, the storage capacitor Ca is charged by the voltage of the capacitance line 52.

When the switching transistor Tr1 is switched OFF, the driving transistor Tr2 still remains in the conducive state due to the charge accumulated in the storage capacitor Ca. Therefore, the organic EL element 79 retains the light emitting state. Therefore, when the active matrix is applied to a drive circuit for light-emitting portions formed in an array assembly 27, the organic EL element continues operating, light emission is maintained, and the exposure of pixels can be conducted with a high brightness even after the switching transistor Tr1 has been switched OFF. Furthermore, this continuous light emission, which is due to the electric charge of the storage capacitor Ca after the switching transistor Tr1 has been switched OFF, is maintained regardless of the signal in the capacitance line 52, as long as the switching transistor Tr1 is switched OFF. As a result, the light emission start and end of the organic EL element can be time-division controlled, as described hereinbelow, by using a common capacitance line 52 for four organic EL element drive circuits 78.

When the signal outputted from the comparators 73(o, e) into the capacitance line 52 is OFF and the switching transistor Tr1 has been switched ON by the timing signals OELl/O to 4/E outputted from the timing controller 69 into the scanning line 53, the electric charge accumulated in the storage capacitor Ca flows through the switching transistor Tr1 and is absorbed by the capacitance line 52. Therefore, the gate voltage of the driving transistor Tr2 decreases and light emission of the organic EL element 79 stops.

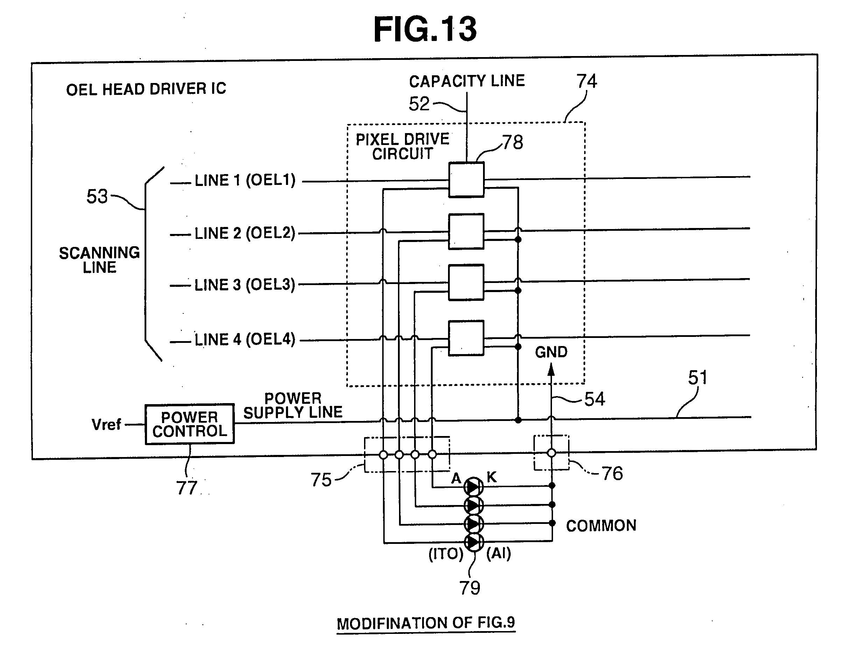

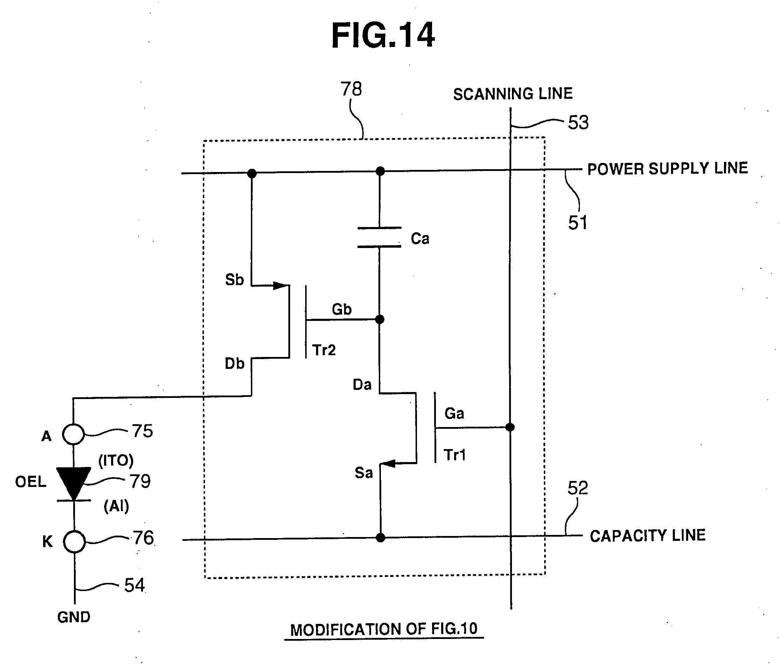

FIG. 13 and FIG. 14 show the organic EL element drive circuits 78 of the modification examples corresponding to the circuits shown in FIG. 11 and FIG. 12. In the organic EL element drive circuits 78 shown in FIG. 11 and FIG. 12 described hereinabove, the anode terminal A of light-emitting portions was common and connected to the power supply line. By contrast in the circuit shown in FIG. 13 and FIG. 14, the cathode terminal K is common and connected to GND. In this case, the anode terminal A is connected to the drain Db of the driving transistor Tr2 of individual organic EL element drive circuits 78, and respective power supply lines 51 are connected to the source Sb of the driving transistor. With this configuration, too, the organic EL elements can be driven according to the ON/OFF signals supplied from the capacitance line 52.

Because the above-described driver IC1 can be produced by using the well-known semiconductor production technology, the detailed explanation of the production method is omitted.

### 3. Control Timing

FIG. 15(a) illustrates the input signal timing of the timing controller 69 shown in FIG. 8 and shows the timing of input signals of the driver IC. The control line of the driver IC is composed of five differential lines, and explanation will be conducted hereinbelow with respect to the timing relating to the introduction of light emission time data via those line, with reference to FIG. 15(a).

The SP (P/N) is a start signal. The pulse thereof is generated prior to receiving the light emission time data, and then generated each time prior to receiving the 192 pixel x 6 bit = 1152 light emission time data. The timing controller 69 counts the number of such SP(P/N), compares the count with the address value that was set in the driver IC, and introduces the next 192 x 6 data when there is a match.

The SDCLK (P/N) is a serial data synchronization clock for reading the serial data on both the fall and rise of the clock. The SDCLK period is a value obtained by diving the maximum light emission time of each element by the number of light-emitting elements in the main axis direction, then deleting by the light emission time width, and multiplying the result by the number of read cycles in the SDCLK period. In the configuration shown in the figure, the following values are obtained for a tandem color printer with A4, 600 dpi, and 50 ppm.

Maximum light emission time = 170 (µsec).

Number of organic EL elements in the main axis direction = 7680.

Light emission time data width = 6 bit.

Number of read cycles in the SDCLK period = 2.

SDCLK period = 170 (µsec) ÷ 7680 ÷ 6 x 2 ≅ 7.4 (nsec).

Therefore, the SDCLK frequency is about 135.5 MHz.

The SD (P/N) is a 6-bit 1-set serial data (light emission time data) and is read synchronously with the SDCLK, as shown in FIG. 15(a).

FIG. 15(b) shows the input signal timing of the timing controller 69 shown in FIG. 8. Of the five differential input signals of the driver IC, it shows the timing of two input signals other than the input signals shown in FIG. 15(a).

The RCLR (P/N) is a data clear signal of the shift register 70(o, e), and the light emission time data outputted to the shift register 71(o, e) are cleared by this pulse.

The TCCLK (P/N) is a reference clock relating to light emission time control of organic EL elements controlled by the timing controller 69 shown in FIG. 8. Timing of SHIFT CLK, CCLK, OELn(o, e), SRn (o, e) is determined based on this reference clock.

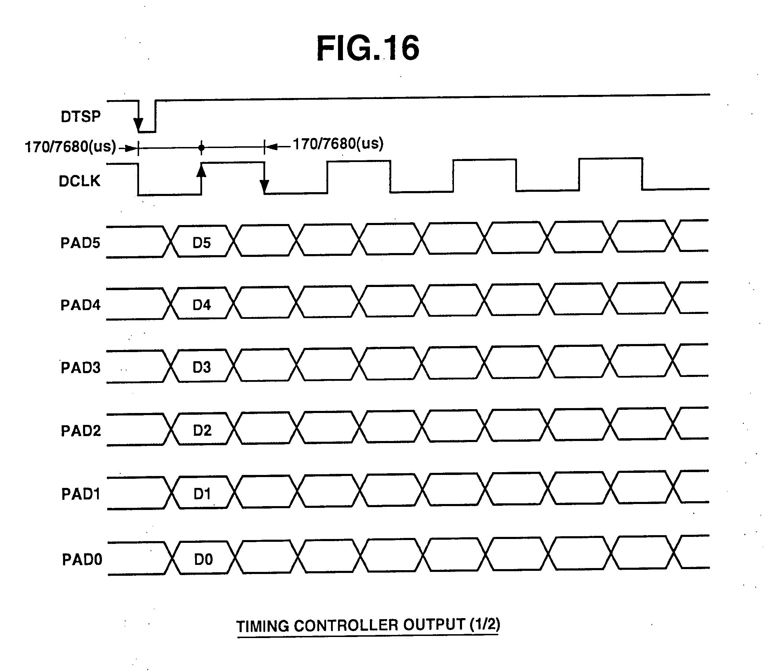

FIG. 16 shows the transfer timing of parallel image data (light emission time data) from the timing controller 69 to the shift register 70(o, e). The DTSP (P/N) is a transfer start signal of the image data, and the DCLK (P/N) is a synchronization clock during data transfer. The PADn is a parallel image data; in the present explanation, it represents the case of 6-bit data. The PADn is successively written into the shift register 70(o, e) synchronously with the rise and fall of the DCLK.

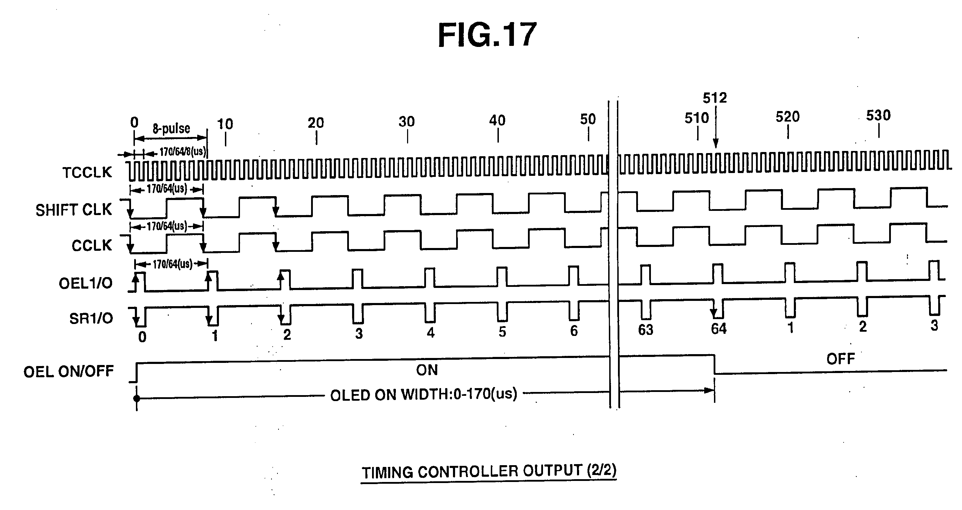

FIG. 17 shows in greater detail the output signal timing of the selector unit of the timing controller 69 shown in FIG. 8.

The TCCLK is a reference clock for controlling the light emission time of the organic EL element and has a period obtained by dividing the maximum light emission time of each element by the light emission time control fraction number and then deleting by the number of lines in the sub scanning direction. As shown in the figure, in the tandem color printer with A4, 600 dpi, and 50 ppm the following results are obtained.

Maximum light emission time = 170 (µsec).

Light emission time control fraction number = 2⁶ = 64 (fractions).

Number of lines in the sub scanning direction = 8 (lines).

TCCLK period = 170 (µsec) + 64 ÷ 8 ≅ 332 (nsec).

Therefore, the TCCLK frequency is about 3 MHz.

The SHIFT CLK is a clock for conducting a consecutive shift of the register held value of the shift registers 71(o, e) and is obtained by dividing the maximum light emission time of each element by the light emission time control fraction number.

The CCLK is a count input signal of the counter 72 shown in FIG. 8, it has the same frequency as the SHIFT CLK.

The scanning line signal OEL1/O and register selection signal SR1/O generate a pulse of one period of the TCCLK in the same timing synchronously with the rise of the first TCCLK after the fall of the SHIFT CLK.

The OEL ON/OFF indicates the ON time of the organic EL element 79 shown in FIG. 8. In the example shown in the figure, the light emission time width is from 0 µsec to a maximum light emission time of 170 µsec.

The light emission operation will be explained with reference to the aforementioned signals. The light emission time data outputted from the first-stage register of the shift register 71o by the register selection signal SR1/O is compared with the count value and the ON or OFF signal is outputted into the capacitance line 52. On the other hand, in the same timing, the scanning line signal OEL1/O is outputted for each constant interval to the first-stage organic EL element drive circuit 78.

As described hereinabove, if the capacitance line 52 is ON when the scanning line signal OEL1/O becomes ON, then the OEL becomes ON and the organic EL elements 79 are turned on. Further, even if the scanning line signal OEL1/O then becomes OFF, the organic EL elements 79 maintain the ON state. Further, if the capacitance line 52 is OFF when the scanning line signal OEL1/O became ON, the OEL becomes OFF and the organic EL elements 79 are turned off.

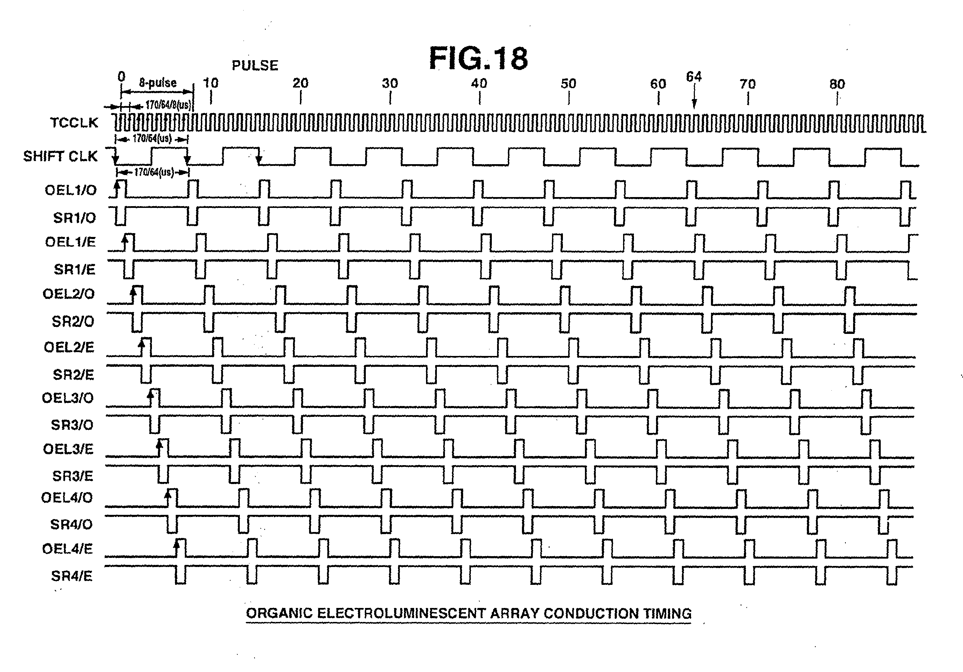

FIG. 18 shows a signal timing of the selector unit and light-emitting element drive circuit of the timing controller 69 shown in FIG. 8. In FIG. 17, the explanation of basic operation was conducted for the OEL1/O and SR1/O, but in FIG. 18, the explanation will be conducted with respect to the light emission control timing of the organic EL elements of 8 lines by combining the odd lines and even lines in the sub scanning direction.

The scanning line signal OELn/O and register selection signal SRn/O generate a pulse of one period of the TCCLK in the same timing synchronously with the rise of the n-th TCCLK after the fall of the SHIFT CLK. The register selection signal SRn/O selects the n-th line register of the shift register 71 (see FIG. 8). Therefore, the light emission time data outputted from this register is compared with the counter value in the comparator 73, and the ON or OFF signal is outputted into the capacitance line 52. On he other hand, in the same time, the scanning line signal OELn/O selects the n-th organic EL element scanning line (see FIG. 8). As described hereinabove, when scanning line has been selected, the organic EL element drive circuit 78 can ON/OFF switch the organic EL elements according to the state of the capacitance line 52 at this time. Therefore, a plurality of organic EL element drive circuits 78 can be time division driven by shifting the selection timing of scanning lines connected to other organic EL element drive circuits having a common capacitance line 52.

Once light emission based on the light emission time data of each register of the shift register 71 has been completed, the light emission time data of each register of the shift register 71 is shifted to the next register for each 64 pulses of the SHIFT CLK and light emission is induced in a similar manner. At this time, the exposure based on the same light emission time data can be conducted by superposition on the same pixels on a photosensitive body by moving the mutual arrangement of the photosensitive body and organic EL array in the sub scanning direction.

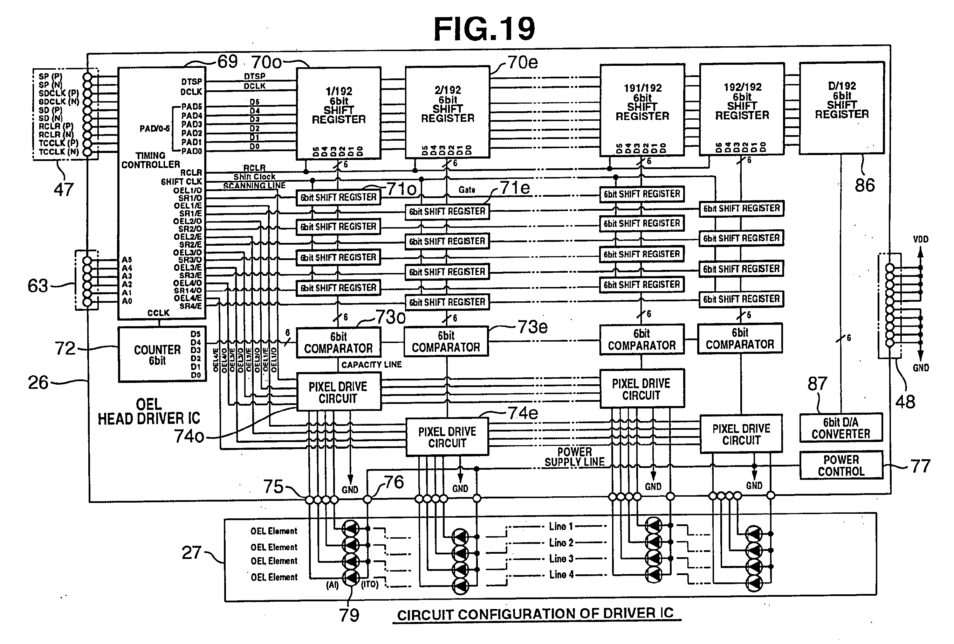

FIG. 19 illustrates another example of circuit configuration of the organic EL array driver IC (driver IC 26). The organic EL array driver IC of the present example, in addition to the configuration shown in FIG. 8, further comprises a light quantity adjustment register 86 and a D/A converter.

The light quantity adjustment register 86 holds the light quantity adjustment data for adjusting the light quantity of the organic EL elements 79 for each driver IC 26. The light quantity adjustment register 86 is an example of adjustment data registers and is provided in serial to 192 shift registers 70. The light quantity adjustment data are outputted from the timing controller 69, shifted successively by the 192 shift registers 70, and stored in the light quantity adjustment register 86.

The D/A converter 87 receives the 6-bit light quantity adjustment data from the light quantity adjustment register 86 and converts them into analog data (voltage). Furthermore, the D/A converter 87 supplies the analog data to the power adjustment circuit 77.

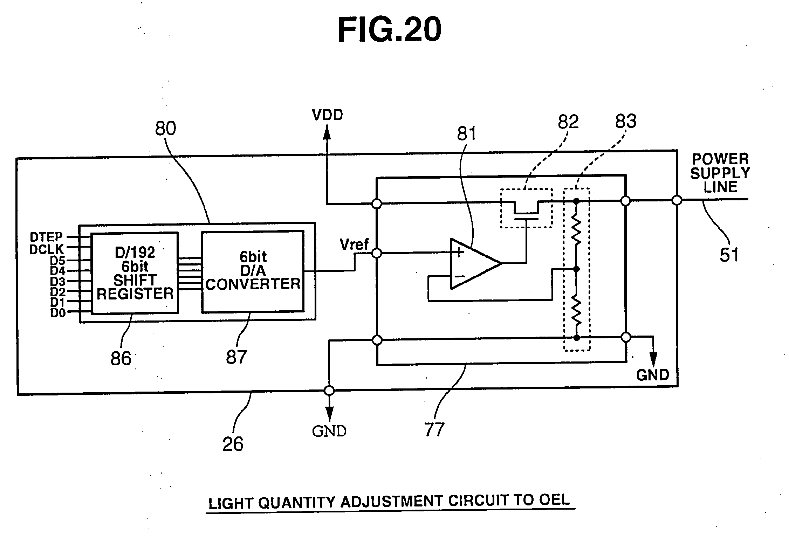

FIG. 20 shows another example of the configuration of the light quantity adjustment circuit of the organic EL element 79. The light quantity adjustment circuit comprises a power adjustment circuit 77 and a reference voltage circuit 80 and adjusts the light quantity of organic EL elements for each driver IC 26 which is an example of the light-emitting element module. More specifically, the power adjustment circuit 77 has a function of adjusting the power supply to the organic EL element drive circuit group 74(o, e) via the power supply line.

The reference voltage circuit 80 comprises a light quantity adjustment register 86 for storing the light quantity adjustment data for adjusting the light quantity of the organic EL array exposure head chip 1 and a D/A converter 87 for converting the light quantity adjustment data into the analog data (output voltage) and supplies the output voltage of the D/A converter as the reference voltage Vref to the power adjustment circuit 77. In the present embodiment, the light quantity adjustment data held in the light quantity adjustment register 86 are attached to the head portions of 192 correction data rows or light emission data rows outputted from the timing controller 69 (see FIG. 19).

In the present embodiment, the light quantity adjustment register 86 is connected to the very last stage of 192 shift registers 70 (see FIG. 19). Thus, the light quantity adjustment register 86 is provided as a shift register of a 193rd stage, but it may be provided in any position from the first to the last stage. In this case, the light quantity adjustment data are attached to the prescribed locations of 192 correction data rows or light emission data rows correspondingly to the position of the light quantity adjustment register 86.

The electric power supplied to the power supply line 51 and to the organic EL elements 79 is adjusted by adjusting the value of the light quantity adjustment data held in the light quantity adjustment register 86 provided in the reference voltage circuit 80. Thus, the light emission quantity of the organic EL elements 79 is adjusted. Thus, the light quantity adjustment circuit adjusts the light emission quantity for each driver IC 26.

The value of light quantity adjustment data is preferably so adjusted that the light emission quantity of the organic EL elements 79 is almost uniformly distributed between a plurality of driver IC 26 constituting the organic EL array exposure head 2. For example, in a plurality of driver IC 26, the light emission quantity of organic EL elements 79 is measured and the value of the light quantity adjustment data in each driver IC 26 is adjusted based on this light emission quantity.

The power adjustment circuit 77 comprises an error amplification circuit 81, a control circuit 82, and a voltage division circuit 83. The voltage division circuit 83 has a plurality of resistors connected in series between the power supply line 51 and GND. Furthermore, the voltage division circuit 83 supplies the voltage of contact points of the aforementioned plurality of resistors, that is, the voltage obtained by dividing the voltage applied to the power supply line 51, to the error amplification circuit 81. The error amplification circuit 81 compares the voltage obtained by division with the voltage division circuit 83 and the reference voltage Vref and supplies the prescribed voltage based on the comparison results to the control circuit 82.

The control circuit 82 is a MOS transistor in which the VDD is supplied to one of the source and the drain and the other is connected to one terminal of the voltage division circuit 83 and the power supply line 51. Furthermore, the prescribed voltage is supplied from the error amplification circuit 81 to the gate of the MOS transistor. Thus, the control circuit controls the electric power supplied to the power supply line 51 based on the comparison results of the error amplification circuit 81.

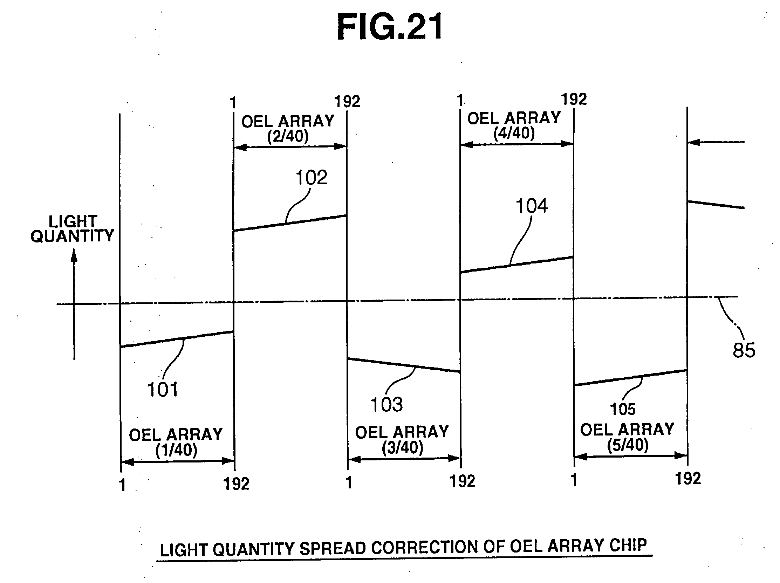

FIG. 21 is employed to explain in greater detail the correction content of the light quantity spread of organic EL element 79 units in the organic EL array exposure head chip 1 and of the organic EL array exposure head chip 1 unit. The light quantity of the each organic EL light-emitting element 79 is plotted against the ordinate, and the row of the organic EL elements 79 in the main scanning direction is plotted against the abscissa.

The line 85 is a set value of light quantity which is a target for the organic EL elements 79. As for a total of 40 organic EL array exposure head chips 1 arranged in the main scanning direction, there is an individual difference in light emission quantity between the organic EL array exposure head chips 1. Further, in the organic EL array exposure head chip 1, there is an individual difference in light emission quantity between the organic EL elements 79. More specifically, the light emission quantity of the organic EL array exposure head chip 1 unit and the light emission quantity of the organic EL element 79 unit have individual differences shown in lines 101-105. This individual difference is caused, for example, by the spread resulting from the individual difference between the processes for the manufacture of organic EL array exposure head chips 1 or the spread resulting from the individual difference between the processes for the manufacture of organic EL elements 79.

A method shown in FIG. 10 and FIG. 20 is used to correct this spread. Thus, the voltage applied by the light quantity adjustment circuit 77 to the power supply line 51 is adjusted by adjusting the resistance of the resistors shown in FIG. 10 or adjusting the light quantity adjustment data of the chip unit stored in the light quantity adjustment register 86 shown in FIG. 20, thereby matching the light emission quantity of the organic EL array exposure head chip 1 to the light quantity set value 85.

On the other hand, a method illustrated by FIG. 9 is used as the method for correcting the spread between the organic EL elements 79. When there is a difference in the light emission quantity, as shown in the figure, between the organic EL elements 79 of the first row to 192^{nd} row provided in the organic EL array exposure head chips 1 shown by the line 101, it can be corrected by a method comprising the steps of setting the light quantity correction data supplied from the timing controller 69 in the adder 84 and then reading the pixel data. As a result, the matching with the light emission quantity parallel to the light quantity set value 85 can be also attained with respect to the light emission quantity of each organic EL element 79. Therefore, the light emission quantity with a large spread shown by lines 101-105 can be matched with the light quantity set value 85.

In the present embodiment, the ON/OFF of organic EL elements of a plurality of rows are time-division controlled. Therefore, all the elements can be set into a light-emitting state at the same point in time. On the other hand, when the data rewriting time of the shift register 71 is long, there is a risk of hindering the ignition of organic EL elements. However, in the present embodiment, the data of one line are temporarily stored in the shift register 70, which is the storage means, and then all together shifted to the shift register 71. Therefore, data rewriting is finished within a short time and the ignition of the organic EL elements is not hindered.

In the present embodiment, the common comparator 73 is connected via the capacitance line 52 to a plurality of organic EL element drive circuits 78. In the present embodiment, the register selection signal SRn/O and scanning line signal OELn/O are synchronized and the selection timing of scanning lines connected to the other organic EL element drive circuits 78 using the common comparator 73 is shifted. Therefore, even though a common comparator 73 is used, a plurality of the organic EL element drive circuits 78 can be driven at different light emission times.

Further, in the present embodiment, a common counter 72 is connected to a plurality of comparators 73o, 73e. As shown in FIG. 17 and FIG. 18, all the light emission time data and counter outputs are compared by the register selection signal SRn within one period of counter clock CCLK. Therefore, though a common counter 72 is used, the gradation control based on individual light emission time data is possible.

## Claims

1. An optical head comprising:
a plurality of light-emitting element modules each having a plurality of light-emitting elements;
a plurality of module light emission quantity control units for controlling the light emission quantity of said plurality of light-emitting elements; and_
a plurality of module light emission quantity correction units for correcting said light emission quantity of said plurality of light-emitting elements for each said light-emitting element module.

2. The optical head according to claim 1, wherein
said module light emission quantity control unit comprises a constant voltage circuit for generating the light emission voltage to be supplied to said plurality of light-emitting elements based on a reference voltage; and
said module light emission quantity correction unit corrects said light emission quantity by correcting said reference voltage supplied to the corresponding said module light emission quantity control unit.

3. The optical head according to claim 2, wherein
said module light emission quantity correction unit comprises a resistor with a resistance so set as to correct said reference voltage so that the light emission quantity of said each light-emitting element is almost uniform among said plurality of light-emitting element modules.

4. The optical head according to claim 1, wherein
said plurality of light-emitting elements constitute a light-emitting element matrix in which light-emitting element groups arranged in the sub scanning direction are further arranged in a plurality in the main scanning direction, wherein
said light-emitting element module comprises
storage means having an adjustment data register and a plurality of pixel data registers provided correspondingly to said plurality of pixels and employed for receiving adjustment data for correcting the electric power supplied to said light-emitting element matrix and a plurality of pixel data for exposing each of said plurality of pixels and successively shifting said adjustment data and said plurality of pixel data and storing them in said adjustment data register and said plurality of pixel data registers;
an element drive circuit for activating the light-emitting elements corresponding to said pixel data based on said pixel data stored in said pixel data registers; and
an electric power adjustment circuit for adjusting the electric power supplied to each light-emitting element of said light-emitting element matrix based on said adjustment data, and wherein
said light-emitting elements are successively activated in said sub scanning direction and a plurality of pixels disposed in said main scanning direction are subjected to multiple exposure.

5. The optical head according to claim 4,
further comprising an analog conversion circuit for converting said adjustment data into analog data, wherein
said electric power adjustment circuit adjusts said electric power based on said adjustment data subjected to analog conversion.

6. The optical head according to any of claims 1 to 5, wherein
said light-emitting elements are organic EL elements.
